# EUROPÄISCHE PATENTSCHRIFT

(11) **EP 3 538 899 B1**
(45) Veröffentlichungstag und Bekanntmachung des Hinweises auf die Patenterteilung: **29.03.2023**
(21) Anmeldenummer: 17797887.1
(22) Anmeldetag: 26.10.2017
(51) Int. Cl.: G01N 35/00, B01L 3/00, B01L 9/00

(54) **PROZESSIERUNG EINER MIKROFLUIDISCHEN KARTUSCHE**
PROCESSING OF A MICROFLUIDIC CARTRIDGE
PROCÉDURE D'UNE CARTOUCHE MICROFLUIDIQUE

(30) Priorität: 10.11.2016 DE 102016222075
(43) Veröffentlichungstag der Anmeldung: 18.09.2019
(73) Patentinhaber: Robert Bosch GmbH, 70442 Stuttgart (DE)
(72) Erfinder: SCHULZ, Martin, 73650 Winterbach (DE); RUPP, Jochen, 70569 Stuttgart (DE); DORRER, Christian, 71364 Winnenden (DE); SEIDL, Karsten, 70839 Gerlingen (DE)
(86) Internationale Anmeldenummer: PCT/EP2017/077451
(87) Internationale Veröffentlichungsnummer: WO 2018/086898

(56) Entgegenhaltungen:
- EP-A1- 2 120 052
- EP-A1- 2 120 052
- DE-A1- 10 226 212
- DE-A1- 10 226 212
- US-A1- 2016 131 672

## Beschreibung

### Stand der Technik

Beim Durchführen von Tests und Analysen mit Proben im klinischen Labor werden üblicherweise Proben zusammen mit personenbezogene Daten, insbesondere Patientendaten, verarbeitet. Dabei ist es von besonderem Interesse, dass es zu keiner unbeabsichtigten Vertauschung von Proben, Patienteninformationen oder Ergebnissen kommt.

Insbesondere bei automatisierten Analysesystemen wie beispielsweise Lab-on-a-Chip-Systemen für die In-vitro-Diagnostik werden hohe Anforderungen an den korrekten Ablauf des Tests oder der Analyse gestellt. Zur eindeutigen Kennzeichnung der Probe werden hierbei üblicherweise menschen- und/oder maschinenlesbare Informationen mit der Probe geliefert.

Eine Vorrichtung, insbesondere eine Lab-on-a-Chip-Kartusche mit integriertem RFID zur Übertragung von probenrelevanten Informationen ist beispielsweise aus EP 2611042 B1, US 20150056099 A1, US 20140030800 A1, EP 2 120 052 A1 und US 2016/0131672 bekannt. Aus dem Dokument DE 102 26 212 A1 ist ein Eignungsprüfungssystem zum Prüfen eines Gegenstands hinsichtlich seiner Eignung für eine aktuell vorgesehene Verwendung bekannt.

### Offenbarung der Erfindung

### Vorteile der Erfindung

Die Erfindung betrifft ein Verfahren zur Prozessierung einer Kartusche, insbesondere einer mikrofluidischen Kartusche, und einer in die Kartusche aufgenommenen biologische Probe mit einer Prozessiereinheit. In einem ersten Schritt werden Probendaten in die Prozessiereinheit eingegeben oder eingelesen, bevor eine Eingabe der Probe in die Kartusche erfolgt und bevor die Kartusche in die Prozessiereinheit aufgenommen wird. In einem zweiten Schritt werden erste Kartuschendaten in die Prozessiereinheit eingegeben oder eingelesen. Alternativ kann die Eingabe oder Einlese der ersten Kartuschendaten auch vor der Eingabe oder Einlese der Probendaten erfolgen. Die Eingabe der Probendaten und/oder der ersten Kartuschendaten kann dabei manuell durch einen Benutzer über eine Eingabeeinrichtung der Prozessiereinheit erfolgen, beispielsweise über ein Tastenfeld oder einen Touchscreen der Prozessiereinheit. Alternativ kann das Einlesen der Probendaten und/oder der ersten Kartuschendaten beispielsweise über ein optisches Lesegerät der Prozessiereinheit erfolgen, beispielsweise einen Code-Scanner. In einem dritten Schritt erfolgt ein Abgleich der Probendaten mit den ersten Kartuschendaten auf eine Kompatibilität der Probe mit der Kartusche durch die Prozessiereinheit, wobei der Abgleich beispielsweise in einer dafür eingerichteten Recheneinheit, auch Prozessor genannt, der Prozessiereinheit erfolgt. In einem vierten Schritt erfolgt eine Ausgabe einer ersten Fehlermeldung durch die Prozessiereinheit, wenn keine Kompatibilität der Probe mit der Kartusche durch die Prozessiereinheit festgestellt werden kann. Die Ausgabe kann dabei beispielsweise optisch über ein Display der Prozessiereinheit oder akustisch über einen Lautsprecher der Prozessiereinheit erfolgen. Wenn keine erste Fehlermeldung ausgegeben wird, wird die Probe in einem fünften Schritt in die Kartusche eingegeben und die Kartusche für eine weitere Prozessierung in die Prozessiereinheit aufgenommen.

Unter der Prozessiereinheit kann insbesondere eine Analyseeinheit zur Analyse der in der Kartusche aufgenommen biologischen Probe verstanden werden, insbesondere eine mikrofluidische Prozessiereinheit. Bei der biologischen Probe kann es sich insbesondere um eine Blutprobe, eine Urinprobe, eine Speichelprobe oder eine Probe aus einem Abstrich handeln. Unter einer Prozessierung der Probe kann insbesondere die Durchführung eines Tests mit der Probe verstanden werden, unter Einsatz der Kartusche, in welche die Probe aufgenommen wird. Beispielsweise kann es sich bei dem Test um einen Assay, insbesondere einen molekularbiologischen Assay, beispielsweise zum Nachweis einer bestimmten Substanz oder von bestimmten Pathogenen wie Viren, Bakterien oder Pilzen in der Probe handeln. Typischerweise ist eine Kartusche für einen oder mehrere Tests oder Analyseverfahren mit einer oder mehreren vorgegeben Proben ausgebildet. Darunter ist insbesondere zu verstehen, dass ein oder mehrere für einen Test vorgegebene Testschritte durch eine Aktuierung der Kartusche über die Prozessiereinheit ausführbar sind. Beispielsweise kann die Kartusche ausgebildet sein, ein Assay für eine der oben genannten biologischen Proben in Zusammenwirkung mit der Prozessiereinheit durchzuführen. Unter einer Kompatibilität der Probe mit der Kartusche kann dabei insbesondere verstanden werden, dass die Probe für den über die Kartusche durchführbaren Test geeignet ist wie beispielsweise eine Blutprobe mit einer Kartusche zum Nachweis von Pathogenen in Blut. Ferner kann unter der Kompatibilität der Probe mit der Kartusche vorzugsweise verstanden werden, dass ein Haltbarkeitsdatum der Probe und/oder der Kartusche noch nicht überschritten wurde, da nach Ablauf der Haltbarkeit kein zuverlässiger Test mehr mit der Probe durchgeführt werden kann und somit die Kartusche nicht oder nicht mehr mit der Probe kompatibel ist.

Die Prozessiereinheit kann eingerichtet sein, ein auf die ersten Kartuschendaten abgestimmtes Prozessierverfahren aus einem Speicher der Prozessiereinheit zu laden. Vorzugsweise sind dabei auf verschiedene Kartuschentypen abgestimmte spezifische Prozessierverfahren, insbesondere unterschiedliche molekularbiologische Assays, in dem Speicher vorgehalten.

Das erfindungsgemäße Verfahren hat den Vorteil, dass durch die Prozessiereinheit festgestellt und dem Benutzer mitgeteilt wird, ob eine Probe grundsätzlich mit einer Kartusche kompatibel ist. Wie oben ausgeführt wird durch die Prozessiereinheit vorteilhafterweise festgestellt, ob die Probe für den über die Kartusche durchführbaren Test geeignet ist. Somit wird vorteilhafterweise das Risiko verringert, dass Proben durch eine Aufnahme in eine für die jeweilige Probe ungeeignete Kartusche unbrauchbar gemacht werden. Dies ist insbesondere dann vorteilhaft, wenn es sich bei den Proben um biologische Proben von Menschen, insbesondere Patienten, handelt, da die Gewinnung solcher Proben neben hohen Kosten in der Regel mit einer physischen und psychischen Belastung der menschlichen Probengeber einhergeht. Das erfindungsgemäße Verfahren verringert somit vorteilhafterweise das Risiko, dass Proben durch eine falsche Prozessierung unbrauchbar werden. Wie oben beschrieben, kann es sich bei der ungeeigneten Kartusche beispielsweise um die falsche Kartusche für einen durchzuführenden Test oder um eine Kartusche mit überschrittenem Haltbarkeitsdatum handeln. Durch die im Prozessierverfahren frühzeitige Warnung an den Benutzer wird vorteilhafterweise das Risiko verringert, dass eine Probe durch Eingabe in eine ungeeignete Kartusche unbrauchbar wird oder umgekehrt durch Eingabe einer ungeeignete Probe in eine Kartusche die Kartusche unbrauchbar wird.

Erfindungsgemäß werden in einem sechsten Schritt zweite Kartuschendaten von der Kartusche in die Prozessiereinheit eingelesen, wobei die Einlese nach der Aufnahme der Kartusche in die Prozessiereinheit erfolgt. In einem siebten Schritt erfolgt ein Abgleich der ersten Kartuschendaten mit den zweiten Kartuschendaten auf einen identischen Identifikationsdatensatz durch die Prozessiereinheit, wobei der Abgleich beispielsweise durch eine dafür eingerichtete Recheneinheit der Prozessiereinheit erfolgt. Wenn die ersten Kartuschendaten und die zweiten Kartuschendaten nicht den identischen Identifikationsdatensatz umfassen, wird in einem achten Schritt eine zweite Fehlermeldung durch die Prozessiereinheit ausgegeben. Bei dem Identifikationsdatensatz kann es sich beispielsweise um eine alphanumerische Zeichenfolge handeln, über welche die Kartusche eindeutig identifiziert werden kann.

Dies hat den Vorteil, dass vor Beginn der weiteren Prozessierung der in die Prozessiereinheit aufgenommenen Kartusche überprüft wird, ob sich bei der aufgenommenen Kartusche um dieselbe Kartusche handelt, deren erste Kartuschendaten in die Prozessiereinheit eingegeben oder eingelesen wurden. Damit kann vorteilhafterweise verhindert werden, dass bei einer parallelen Verwendung von mehreren Kartuschen, insbesondere gleichartigen Kartuschen mit unterschiedlichen Proben, und/oder Prozessiereinheiten die falsche Kartusche durch die Prozessiereinheit prozessiert wird und insbesondere dadurch eine falsche Probe prozessiert wird. Diese Eigenschaft des erfindungsgemäßen Verfahrens verringert somit vorteilhafterweise noch weiter das Risiko, dass Proben oder Kartuschen durch eine falsche Prozessierung unbrauchbar werden.

In einer vorteilhaften Ausgestaltung der Erfindung handelt es sich bei den ersten Kartuschendaten und bei den zweiten Kartuschendaten um dieselben Kartuschendaten, welche mehrfach eingelesen oder eingegeben werden können. Dies hat den Vorteil, dass nicht zwei verschiedene Datensätze vorgehalten werden müssen.

Gemäß einer vorteilhaften Ausgestaltung der Erfindung erfolgt die Einlese der ersten und/oder zweiten Kartuschendaten über einen Transponder, insbesondere einen RFID-Chip, der Kartusche, wobei der Transponder insbesondere in einem für einen Benutzer nicht zugänglichen Bereich, vorzugsweise einem Innenbereich der Kartusche, angeordnet ist. Unter einem für den Benutzer nicht zugänglichen Bereich kann insbesondere ein Bereich der Kartusche verstanden werden, zu dem der Benutzer nur über eine zumindest teilweise Zerstörung der Kartusche Zugang erhält. Dies hat den Vorteil, dass die Möglichkeit einer Manipulation des Transponders erschwert wird.

Vorzugsweise ist der Transponder dabei irreversibel mit einem Teil der Kartusche, beispielsweise einer Abdeckung der Kartusche, irreversibel verbunden, beispielsweise über eine Schnappverbindung. Unter einer irreversiblen Verbindung ist hierbei insbesondere eine Verbindung zu verstehen, die nur über zumindest teilweise Zerstörung des Transponders oder des mit dem Transponder verbundenen Teils gelöst werden kann. Durch diese irreversible Verbindung wird das Risiko einer ungewünschten Manipulation der Kartusche weiter verringert.

Gemäß einer weiteren vorteilhaften Ausgestaltung der Erfindung erfolgt die Einlese der ersten Kartuschendaten über eine optische Einlese der auf einer Außenseite der Kartusche aufgebrachten ersten Kartuschendaten, wobei die ersten Kartuschendaten insbesondere in Form eines ein- oder zweidimensionalen Codes aufgebracht sind. Dies hat den Vorteil, dass die ersten Kartuschendaten über ein optisches Lesegerät der Prozessiereinheit auf einfache Art und Weise eingelesen werden können. Wenn das Lesegerät der Prozessiereinheit für eine Auslese der ersten Kartuschendaten außerhalb der Kartusche eingerichtet ist, ist ferner von Vorteil, dass durch die Aufbringung der ersten Kartuschendaten auf der Außenseite der Kartusche der Nutzer davon abgehalten wird, die Kartusche vor Einlese der ersten Kartuschendaten bereits in die Prozessiereinheit einzugeben.

In einer besonders vorteilhaften Weiterbildung der Erfindung wird ein in den ersten oder zweiten Kartuschendaten enthaltenes Haltbarkeitsdatum der Kartusche mit einem aktuellen Datum durch die Prozessiereinheit verglichen und bei einer Überschreitung des aktuellen Datums durch das Haltbarkeitsdatum eine Fehlermeldung durch die Prozessiereinheit ausgegeben.

Erfindungsgemäß wird nach einem Abschluss der Prozessierung eine Information über die erfolgte Benutzung der Kartusche in einem Speicher der Kartusche abgelegt, beispielsweise in einem Speicher des Transponders. Vorzugsweise bildet diese Information dann einen Teil der ersten oder zweiten Kartuschendaten. Dies hat den Vorteil, dass bei einer irrtümlich beabsichtigten weiteren Benutzung derselben Kartusche eine bereits erfolgte Benutzung durch die Prozessiereinheit erkannt werden kann. Wenn es sich bei den ersten Kartuschendaten und den zweiten Kartuschendaten nicht um dieselben Kartuschendaten handelt, ist es bevorzugt, dass die Information über die Unbrauchbarkeit einen Teil der ersten Kartuschendaten bildet. Dies hat den Vorteil, dass eine Unbrauchbarkeit festgestellt werden kann, bevor eine Eingabe der Probe in die Kartusche erfolgt.

Vorzugsweise wird bei einer beim Verarbeiten der ersten oder zweiten Kartuschendaten festgestellten Unbrauchbarkeit der Kartusche eine Information über die Unbrauchbarkeit in einem Speicher der Kartusche abgelegt, beispielsweise in einem Speicher des Transponders. Vorzugsweise bildet diese Information dann einen Teil der ersten oder zweiten Kartuschendaten. Dies hat den Vorteil, dass bei einer irrtümlich beabsichtigten weiteren Benutzung derselben Kartusche eine Unbrauchbarkeit der Kartusche durch die Prozessiereinheit erkannt werden kann. Wenn es sich bei den ersten Kartuschendaten und den zweiten Kartuschendaten nicht um dieselben Kartuschendaten handelt, ist es bevorzugt, dass die Information über die Unbrauchbarkeit einen Teil der ersten Kartuschendaten bildet. Dies hat den Vorteil, dass eine Unbrauchbarkeit festgestellt werden kann, bevor eine Eingabe der Probe in die Kartusche erfolgt.

Bevorzugt wird eine Fehlermeldung durch die Prozessiereinheit ausgegeben, wenn bei einem Verarbeiten der ersten oder zweiten Kartuschendaten eine Unbrauchbarkeit der Kartusche oder die Information über die bereits erfolgte Benutzung der Kartusche ermittelt wird. Die Ausgabe der Fehlermeldung kann dabei beispielsweise optisch über ein Display der Prozessiereinheit oder akustisch über einen Lautsprecher der Prozessiereinheit erfolgen. Dadurch wird der Benutzer vorteilhafterweise über eine nicht verwendbare Kartusche informiert.

In einer besonders bevorzugten Weiterbildung der Erfindung wird im Transponder, insbesondere in einem Speichers des Transponders, der Kartusche ein Kill-switch für eine irreversible Zerstörung des Transponders gesetzt, wenn eine Überschreitung eines Haltbarkeitsdatums der Kartusche durch die Prozessiereinheit festgestellt wird. Unter einem Kill-switch kann dabei insbesondere eine elektrische Zerstörung, beispielsweise über einen hohen Strom, verstanden werden, wobei dabei insbesondere der Speicher irreversibel zerstört wird, so dass bei einem erneuten Ausleseversuch des Speichers keine Kartuschendaten vollständig ausgelesen werden können. Ferner kann vorzugsweise der Kill-switch gesetzt werden, wenn eine bereits erfolgte Benutzung der Kartusche durch die Prozessiereinheit festgestellt wird. Alternativ können die ersten und/oder zweiten Kartuschendaten in einem Speicher der Kartusche gelöscht werden, wenn die Überschreitung des Haltbarkeitsdatum und/oder wenn die bereits erfolgte Benutzung der Kartusche durch die Prozessiereinheit festgestellt wird.

Gegenstand der Erfindung ist auch eine Prozessiereinheit zur Prozessierung einer Kartusche, insbesondere einer mikrofluidischen Kartusche, und einer in die Kartusche aufgenommenen biologische Probe. Die Prozessiereinheit weist eine Recheneinheit auf, wobei die Recheneinheit eingerichtet ist, eingegebene oder eingelesene Probendaten mit eingegebenen oder eingelesenen ersten Kartuschendaten auf eine Kompatibilität der Probe mit der Kartusche abzugleichen und eine erste Fehlermeldung auszugeben, wenn keine Kompatibilität der Probe mit der Kartusche durch die Recheneinheit festgestellt werden kann. Zu den Vorteilen und Definitionen der erfindungsgemäßen Prozessiereinheit und folgenden Weiterbildungen sei auf die obigen Ausführungen verwiesen.

Erfindungsgemäß ist die Recheneinheit ferner eingerichtet, eingegebene oder eingelesene erste Kartuschendaten mit von der Kartusche eingelesenen zweiten Kartuschendaten auf einen identischen Identifikationsdatensatz abzugleichen und eine zweite Fehlermeldung auszugeben, wenn die ersten Kartuschendaten und die zweiten Kartuschendaten nicht den identischen Identifikationsdatensatz umfassen.

Die Prozessiereinheit, insbesondere die Recheneinheit der Prozessiereinheit, kann vorzugsweise derart eingerichtet sein, dass eine Öffnung in einen Schacht der Prozessiereinheit zur Aufnahme der Kartusche erst nach einem Einlesen beziehungsweise Eingeben der ersten Kartuschendaten erfolgt, insbesondere erst nach einem positiven Abgleich der ersten Kartuschendaten mit einem in einem Speicher der Prozessiereinheit abgelegten Verfahren zur Prozessierung der Kartusche. Dies hat den Vorteil, dass keine Kartuschen in die Prozessiereinheit aufgenommen werden können, die nicht prozessiert werden können.

Gegenstand der Erfindung ist ferner eine Kartusche, insbesondere eine mikrofluidische Kartusche, zur Prozessierung einer in die Kartusche aufgenommenen biologischen Probe. Die Kartusche umfasst auf einer Außenseite der Kartusche aufgebrachte erste Kartuschendaten. Die Kartusche umfasst ferner einen Transponder, insbesondere einen RFID-Chip, wobei der Transponder einen Speicher für darin abzulegende oder abgelegte zweite Kartuschendaten umfasst, wobei die ersten Kartuschendaten und die zweiten Kartuschendaten einen identischen Identifikationsdatensatz umfassen. Zu den Vorteilen und Definitionen der erfindungsgemäßen Kartusche und folgenden Weiterbildungen und Ausgestaltungen sei auf die obigen Ausführungen verwiesen.

Gemäß einer besonders vorteilhaften Ausgestaltung der Erfindung ist der Transponder in einem für einen Benutzer nicht zugänglichen Bereich, vorzugsweise einem Innenbereich der Kartusche, angeordnet.

Vorzugsweise ist der Transponder an einer Innenseite eines Teils einer Abdeckung der Kartusche angeordnet, wobei der Teil nicht zerstörungsfrei von der Kartusche getrennt werden kann.

Vorzugsweise sind die ersten Kartuschendaten in Form eines ein- oder zweidimensionalen Codes auf einer Außenseite der Kartusche aufgebracht, insbesondere in Form eines Barcodes oder eines Matrix-Codes, wie beispielsweise einem QR-Code^{®} oder DataMatrix^{™} Code (kurz DMC) genannt. Dies hat den Vorteil, dass die ersten Kartuschendaten über ein optisches Lesegerät der Prozessiereinheit auf einfache Art und Weise eingelesen werden können. Ferner ist von Vorteil, dass durch die Aufbringung der ersten Kartuschendaten auf der Außenseite der Kartusche der Nutzer davon abgehalten wird, die Kartusche vor Einlese der ersten Kartuschendaten bereits in die Prozessiereinheit einzugeben, wenn das Lesegerät für eine Auslese außerhalb der Kartusche eingerichtet ist.

Gegenstand der Erfindung ist auch ein Prozessiersystem umfassend eine erfindungsgemäße Prozessiereinheit und eine erfindungsgemäße Kartusche.

### Kurze Beschreibung der Zeichnungen

Ausführungsbeispiele der Erfindung sind in den Zeichnungen schematisch dargestellt und in der nachfolgenden Beschreibung näher erläutert. Für die in den verschiedenen Figuren dargestellten und ähnlich wirkenden Elemente werden gleiche Bezugszeichen verwendet, wobei auf eine wiederholte Beschreibung der Elemente verzichtet wird.

Es zeigen
- Figuren 1a und 1b: ein Ausführungsbeispiel eines erfindungsgemäßen Prozessiersystems,
- Figuren 2a und 2b: Ansichten der Kartusche aus dem Ausführungsbeispiel gemäß der Figuren 1a und 1b sowie
- Figur 3: ein Ausführungsbeispiel eines mit dem erfindungsgemäßen Prozessiersystem durchführbaren erfindungsgemäßen Verfahrens.

### Ausführungsformen der Erfindung

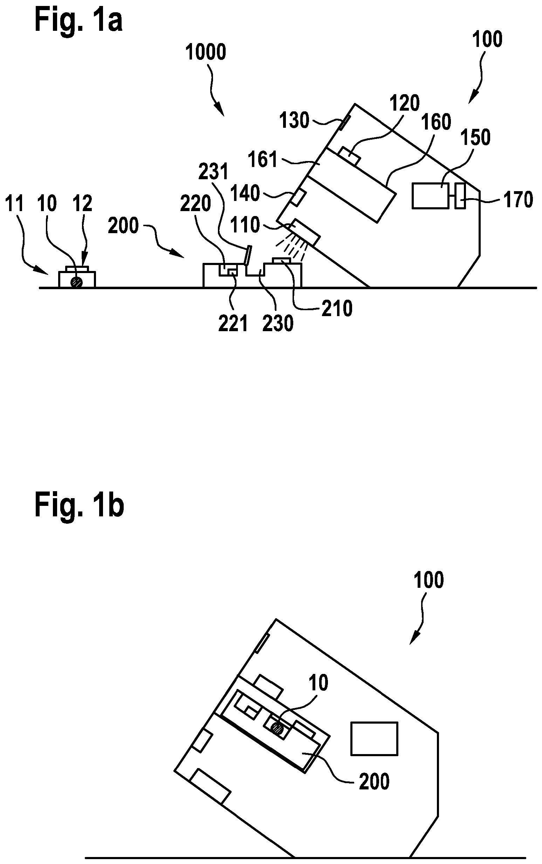

Figuren 1a und 1b zeigen ein Ausführungsbeispiel eines erfindungsgemäßen Prozessiersystems 1000, welches eine Ausführungsform der erfindungsgemäßen Prozessiereinheit 100 und eine Ausführungsform der erfindungsgemäßen Kartusche 200 umfasst.

Wie in Figur 1a dargestellt, umfasst die Prozessiereinheit 100 dabei ein optisches Lesegerät 110, beispielsweise einen Barcode-Scanner oder eine Kamera, zur Einlese von maschinenlesbaren Informationen. Ferner umfasst die Prozessiereinheit 100 einen ersten Transponder 120 zur kabellosen Einlese von Daten, beispielsweise einen zur Auslese von RFID-Chips eingerichteten Transponder, sowie eine Interaktionsfläche 130, beispielsweise eine berühungssensitive Anzeigefläche, auch touch screen genannt, zur Eingabe und Anzeige von Informationen. Die Prozessiereinheit 100 kann darüber hinaus einen Lautsprecher 140 zur Wiedergabe von Informationen an den Benutzer umfassen.

Eine Recheneinheit 150 der Prozessiereinheit ist eingerichtet, die über das Lesegerät 110, den ersten Transponder 120 oder die Interaktionsfläche 130 eingelesenen beziehungsweise eingegebenen Daten zu verarbeiten. Die Recheneinheit 150 ist mit einem Speicher 170 der Prozessiereinheit 100 verbunden und eingerichtet, ein oder mehrere im Speicher 170 abgelegte Prozessierverfahren zu verarbeiten. Ferner ist die Recheneinheit 150 eingerichtet, die Prozessiereinheit 100 für eine Prozessierung einer in einen Schacht 160 der Prozessiereinheit 100 aufgenommenen erfindungsgemäßen Kartusche 200, wie in Figur 1b dargestellt, gemäß einem der in dem Speicher 170 abgelegten Prozessierverfahren anzusteuern. Der Schacht 160 kann dabei mit einem Deckel 161 des Schachts 160 verschlossen werden. Die Prozessiereinheit 100 weist darüber hinaus nicht dargestellte Mittel zur mikrofluidischen Prozessierung der Kartusche 200 auf. Bei diesen Mitteln kann es sich um in der Mikrofluidik typische mechanische, pneumatische oder thermische Aktuatoren zur Durchführung mikrofluidischer Prozesse in der Kartusche handeln, wie beispielsweise Stößel, Heizelemente oder Druckluftanschlüsse.

Figur 1b zeigt ferner ein Ausführungsbeispiel der erfindungsgemäßen Kartusche 200 als Teil des erfindungsgemäßen Prozessiersystems. Die Kartusche 200 kann dabei einen in der Mikrofluidik bekannten auf Kunststoff basierenden Schichtaufbau umfassen. Die Kartusche 200 weist eine Probenkammer 230 zur Aufnahme einer biologische Probe 10 auf, welche unter Zuhilfenahme der Kartusche 200 und der Prozessiereinheit 100 prozessiert werden soll. Die Probenkammer 230 kann dabei mit einem Deckel 231 der Probenkammer 230 verschlossen werden. Vor Eingabe der Probe 10 in die Kartusche 200 kann sich die Probe 10 beispielsweise in einem für biologische Proben geeigneten Probenbehälter 11 wie einem Glas- oder Kunststoffbehälter befinden. Auf dem Probenbehälter 11 können Probendaten 12 zur Probe 10, beispielsweise eine Art der Probe 10 und/oder eine Referenz zum Probengeber, aufgebracht sein, beispielsweise in für einen menschlichen Benutzer lesbarer Form und/oder codiert in Form eines Labels 12 oder eines Aufdrucks 12, beispielsweise eines Barcodes.

Die Kartusche 200 weist ein diesem Beispiel einen auf einer Außenseite, in diesem Fall auf einem Deckel 240, der Kartusche 200 aufgebrachten Barcode 210 auf, welche erste Kartuschendaten 210 codiert. Die ersten Kartuschendaten 210 können dabei beispielsweise Informationen über den Typ der Kartusche 210 und/oder ein mit der Kartusche durchführbares Prozessierverfahren, Analyseverfahren oder Testverfahren umfassen. Ferner umfasst die Kartusche 200 einen zweiten Transponder 220, beispielsweise einen RFID-Chip, mit einem Speicher 221, in welchem zweite Kartuschendaten abgelegt sind. Die ersten Kartuschendaten 210 und die zweiten Kartuschendaten umfassen dabei zumindest einen identischen Identifikationsdatensatz, beispielsweise eine alphanumerische Zeichenfolge zur eindeutigen Identifikation der Kartusche 200, beispielsweise eine ID des RFID-Chips.

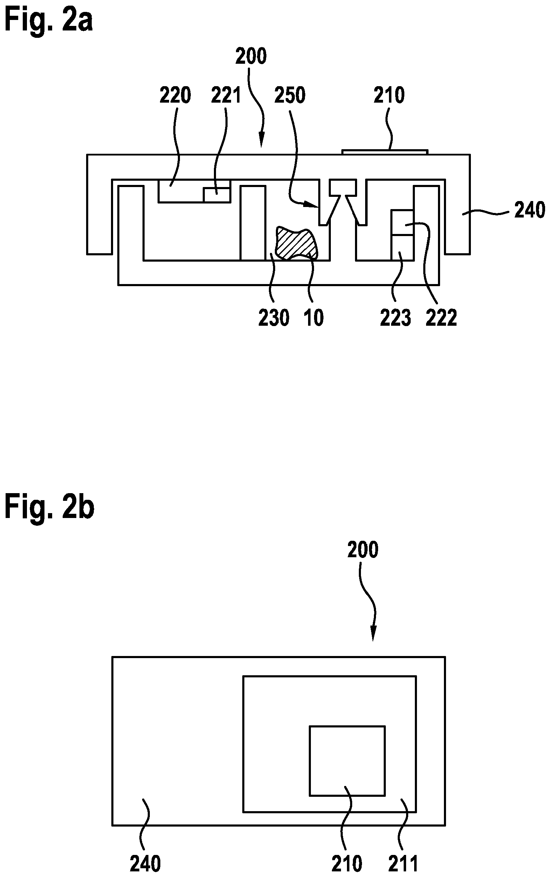

Wie in Figur 2a dargestellt, ist ein Deckel 240 der Kartusche 200 über eine irreversible Schnappverbindung 250 mit der Kartusche 200 verbunden. Die Schnappverbindung 250 ist somit derart ausgeformt, dass eine Öffnung des Deckels nur über eine zumindest teilweise Zerstörung der Schnappverbindung 250 möglich ist. Die Eingabe der Probe 10 in die Probenkammer 230 muss somit vor Verschließen der Kartusche 200 mit dem Deckel 240 erfolgen. Der zweite Transponder 220 ist auf der der Kartusche 200 zugewandten Unterseite des Deckels 240 angeordnet, so dass der zweite Transponder 210 nach Verbindung des Deckels 240 mit der Kartusche 200 für einen Benutzer nicht mehr zugänglich ist. In Figur 2b ist zu sehen, dass die ersten Kartuschendaten 210 in diesem Beispiel in Form eines zweidimensionalen Barcodes 210 als Teil eines Labels 211 auf der Oberseite des Deckels 240 aufgebracht sind, beispielsweise aufgeklebt. Alternativ könnten die ersten Kartuschendaten 210 auch in einem Speicher 223 eines dritten Transponders 222 abgelegt sein. Wie in Figur 2a dargestellt, kann der dritte Transponder 222 dabei in einem anderen Teil als dem Deckel 240 der Kartusche 200 angeordnet sein. In einer weiteren Alternative kann es sich bei den ersten Kartuschendaten 210 und bei den zweiten Kartuschendaten um dieselben Daten handeln, welche in dem Speicher 221 des zweiten Transponders 220 abgelegt sind und mehrfach ausgelesen werden können.

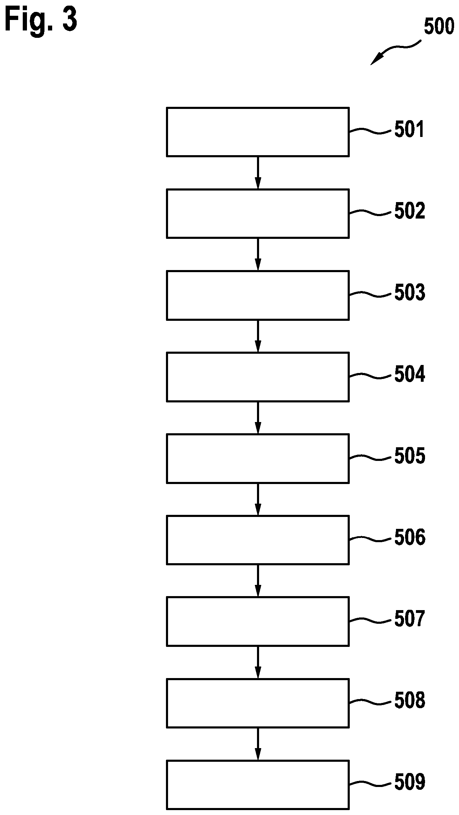

Figur 3 zeigt ein Flussdiagramm eines Ausführungsbeispiels des erfindungsgemäßen Verfahrens 500 basierend auf dem in den Figuren 1 und 2 gezeigten Ausführungsbeispiel des erfindungsgemäßen Prozessiersystems 1000.

Nachdem ein Benutzer des Prozessiersystems 1000 ein Probe 10 für eine Analyse mit dem Prozessiersystem 1000 erhalten hat, werden in einem ersten Schritt 501 die Probendaten 12 in die Prozessiereinheit 100 eingegeben oder eingelesen, bevor die Probe 10 in die Kartusche 100 eingegeben und bevor die Kartusche 100 in die Prozessiereinheit eingegeben wird. Bei der biologischen Probe 10 kann es sich insbesondere um eine Blutprobe, eine Urinprobe, eine Speichelprobe oder eine Probe aus einem Abstrich handeln. Bei der durchzuführenden Analyse kann es sich beispielsweise um einen Assay, insbesondere einen molekularbiologischen Assay, beispielsweise zum Nachweis einer bestimmten Substanz oder von bestimmten Pathogenen wie Viren, Bakterien oder Pilzen in der Probe handeln. Die Probendaten 12 können dabei, wie oben ausgeführt, abhängig von der Form und Codierung der Probedaten 12 entweder vom Benutzer über die Interaktionsfläche 130 oder über das Lesegerät 110 in die Prozessiereinheit eingegeben beziehungsweise eingelesen werden.

In einem zweiten Schritt 502 werden die erste Kartuschendaten 210 in die Prozessiereinheit 100 über das Lesegerät 110 eingelesen. Wenn die Form und Codierung der ersten Kartuschendaten 210 es erlauben, können diese auch alternativ durch den Benutzer über die Interaktionsfläche 130 eingegeben werden. Wenn, wie oben beschrieben, die ersten Kartuschendaten 210 alternativ im Speicher 221 des zweiten Transponders 220 oder im Speicher 223 des dritten Transponders 222 abgelegt sind, können diese über den ersten Transponder 120 kabellos eingelesen werden. Alternativ kann der zweite Schritt 502 der Eingabe oder Einlese der ersten Kartuschendaten 210 auch vor dem ersten Schritt 501 der Eingabe oder Einlese der Probendaten 10 erfolgen.

Wie oben beschrieben, ist die Prozessiereinheit 100 eingerichtet, ein auf die ersten Kartuschendaten 210 abgestimmtes Prozessierverfahren aus dem Speicher 170 der Prozessiereinheit 100 zu laden. In einem dritten Schritt 503 erfolgt ein Abgleich der Probendaten 12 mit den ersten Kartuschendaten 210 auf eine Kompatibilität der Probe 10 mit der Kartusche 20 durch die dafür eingerichtete Recheneinheit 150. In einem vierten Schritt 504 erfolgt eine Ausgabe einer ersten Fehlermeldung durch die Prozessiereinheit, wenn keine Kompatibilität der Probe 10 mit der Kartusche durch die Prozessiereinheit festgestellt werden kann. Die Ausgabe kann dabei beispielsweise optisch über ein Display der Interaktionsfläche 130 oder akustisch über den Lautsprecher 140 der Prozessiereinheit 100 erfolgen. Unter einer Kompatibilität der Probe 10 mit der Kartusche 200 ist hierbei insbesondere zu verstehen, dass die Probe 10 für den über die Kartusche 200 durchführbaren Test oder Analyse geeignet ist Ferner ist die Recheneinheit 100 eingerichtet, ein in den Probendaten 12 und/oder ersten Kartuschendaten 210 enthaltenes Haltbarkeitsdatum der Probe 10 beziehungsweise der Kartusche 100 mit einem in der Recheneinheit 150 vorgehaltenem aktuellen Datum zu vergleichen und bei Überschreitung eines des Haltbarkeitsdaten eine Fehlermeldung über die Interaktionsfläche 130 oder den Lautsprecher 140 ausgegeben. Vorzugsweise wird im Falle eine Überschreitung des Haltbarkeitsdatums der Kartusche 200 eine Information über die Unbrauchbarkeit der Kartusche 200 im Speicher 221, 223 des zweiten oder dritten Transponders 220, 222 abgelegt, wo diese Information dann einen Teil der ersten beziehungsweise zweiten Kartuschendaten bildet und bei einem weiteren Auslesen der Kartuschendaten durch die Prozessiereinheit 100 erkannt werden kann. Alternativ können die ersten und/oder zweiten Kartuschendaten 210 in diesem Fall gelöscht werden oder es kann ein den zweiten oder dritten Transponder 220, 222 zerstörender Kill-switch gesetzt werden, was das Risiko einer weiteren Benutzung durch die Prozessiereinheit verringert. Außerdem kann die Recheneinheit 150 eingerichtet sein, eine vorgegebene Information über eine bereits erfolgte Benutzung der Kartusche 200 in den ersten Kartuschendaten 210 zu erkennen und eine entsprechende Fehlermeldung an den Benutzer auszugeben. Diese vorteilhafte Einrichtung der Recheneinheit 150 kann somit verhindern, dass abgelaufenen Proben, abgelaufene Kartuschen oder bereits benutzte Kartuschen verwendet werden. Durch diese im Prozessierverfahren frühzeitig erfolgende Warnung an den Benutzer wird insbesondere das Risiko verringert, dass eine Probe 10 durch Eingabe in eine ungeeignete Kartusche 200 unbrauchbar wird oder umgekehrt durch Eingabe einer ungeeigneten Probe 10 in eine Kartusche 200 die Kartusche 200 unbrauchbar wird.

Wenn keine Fehlermeldung ausgegeben wird, wird die Probe 10 in einem fünften Schritt 505 durch den Benutzer in die Kartusche 200 eingegeben und verschlossen und die Kartusche 200 in den Schacht 160 der Prozessiereinheit 160 eingegeben. In einem sechsten Schritt 506 werden die zweiten Kartuschendaten aus dem Speicher 221 des zweiten Transponders der aufgenommenen Kartusche 200 in die Prozessiereinheit 100 über den ersten Transponder 120 eingelesen.

In einem siebten Schritt 507 erfolgt ein Abgleich der ersten Kartuschendaten 210 mit den zweiten Kartuschendaten auf den identischen Identifikationsdatensatz durch die dafür eingerichtete Recheneinheit 150 der Prozessiereinheit 100. Wenn die ersten Kartuschendaten 210 und die zweiten Kartuschendaten nicht den identischen Identifikationsdatensatz umfassen, wird in einem achten Schritt 508 eine zweite Fehlermeldung durch die Prozessiereinheit 100 ausgegeben. Damit wird vorteilhafterweise erkannt, ob sich bei der aufgenommenen Kartusche 200 um dieselbe Kartusche 200 handelt, deren erste Kartuschendaten 210 in die Prozessiereinheit 100 eingegeben oder eingelesen wurden. Außerdem kann die Recheneinheit 150 eingerichtet sein, eine vorgegebene Information über eine bereits erfolgte Benutzung der Kartusche 200 auch in den zweiten Kartuschendaten zu erkennen und eine entsprechende Fehlermeldung an den Benutzer auszugeben.

Wenn keine Fehlermeldung ausgegeben wurde, kann in einem neunten Schritt 509 die weitere Prozessierung der Kartusche 200 und der aufgenommenen Probe 10 durch die Prozessiereinheit 100 durchgeführt werden.

Nach dem Abschluss der Prozessierung wird in einem zehnten Schritt 510 eine vorgegebene Information über die erfolgte Benutzung der Kartusche 200 im Speicher 221, 224 des ersten oder, sofern vorhanden, zweiten Transponders 220, 222 der Kartusche 200 abgelegt, Diese Information bildet dann somit einen Teil der ersten oder zweiten Kartuschendaten. Dies hat den Vorteil, dass bei einer irrtümlich beabsichtigten weiteren Benutzung derselben Kartusche 200 eine bereits erfolgte Benutzung durch die Prozessiereinheit 100 erkannt werden kann, wie oben ausgeführt.

## Patentansprüche

1. Verfahren (500) zur Prozessierung einer Kartusche (200), insbesondere einer mikrofluidischen Kartusche (200), und einer in die Kartusche (200) aufgenommenen biologische Probe (10) mit einer Prozessiereinheit (100), umfassend die Schritte:
• Eingabe (501) oder Einlese (501) von Probendaten (12) in die Prozessiereinheit (100) vor Eingabe der Probe (10) in die Kartusche und vor Aufnahme der Kartusche (200) in die Prozessiereinheit (100)
• Eingabe (502) oder Einlese (502) von ersten Kartuschendaten (210) in die Prozessiereinheit (100)
• Abgleich (503) der Probendaten (12) mit den ersten Kartuschendaten (210) auf eine Kompatibilität der Probe (10) mit der Kartusche (200) durch die Prozessiereinheit (100)
• Ausgabe (504) einer ersten Fehlermeldung durch die Prozessiereinheit (100), wenn keine Kompatibilität der Probe (10) mit der Kartusche (200) durch die Prozessiereinheit (100) festgestellt werden kann
• Eingabe (505) der Probe (10) in die Kartusche (200), wenn keine erste Fehlermeldung ausgegeben wird, und Aufnahme (505) der Kartusche (200) in die Prozessiereinheit (100) für eine weitere Prozessierung
**dadurch gekennzeichnet, dass**
nach einem Abschluss der Prozessierung eine Information über die erfolgte Benutzung der Kartusche (200) in einem Speicher (221, 223) der Kartusche (200) abgelegt wird.

2. Verfahren (500) nach Anspruch 1, umfassend ferner die Schritte:
• Einlese (506) von zweiten Kartuschendaten von der Kartusche (200) in die Prozessiereinheit (100), wobei die Einlese nach der Aufnahme der Kartusche (200) in die Prozessiereinheit (100) erfolgt
• Abgleich (507) der ersten Kartuschendaten (210) mit den zweiten Kartuschendaten auf einen identischen Identifikationsdatensatz durch die Prozessiereinheit (100)
• Ausgabe (508) einer zweiten Fehlermeldung durch die Prozessiereinheit (100), wenn die ersten Kartuschendaten (210) und die zweiten Kartuschendaten nicht den identischen Identifikationsdatensatz umfassen.

3. Verfahren (500) nach einem der vorhergehenden Ansprüche, wobei bei einer beim Verarbeiten der ersten oder zweiten Kartuschendaten (210) festgestellten Unbrauchbarkeit der Kartusche (200) eine Information über die Unbrauchbarkeit in einem Speicher (221, 223) der Kartusche (200) abgelegt wird, insbesondere als Teil der ersten oder zweiten Kartuschendaten (210).

4. Verfahren (500) nach einem der vorhergehenden Ansprüche, wobei eine Fehlermeldung durch die Prozessiereinheit (100) ausgegeben wird, wenn bei einem Verarbeiten der ersten oder zweiten Kartuschendaten (210) eine Unbrauchbarkeit der Kartusche (200) oder die Information über die bereits erfolgte Benutzung der Kartusche (200) ermittelt wird.

5. Verfahren (500) nach einem der vorhergehenden Ansprüche, wobei ein in den ersten oder zweiten Kartuschendaten (210) enthaltenes Haltbarkeitsdatum der Kartusche (200) mit einem aktuellen Datum durch die Prozessiereinheit (100) verglichen wird und bei einer Überschreitung des aktuellen Datums durch das Haltbarkeitsdatum eine Fehlermeldung durch die Prozessiereinheit (100) ausgegeben wird.

6. Verfahren (500) nach einem der vorhergehenden Ansprüche, wobei die Einlese der ersten Kartuschendaten (210) über eine optische Einlese der auf einer Außenseite der Kartusche (200) aufgebrachten ersten Kartuschendaten (210) erfolgt, wobei die ersten Kartuschendaten (210) insbesondere in Form eines ein- oder zweidimensionalen Codes aufgebracht sind.

7. Verfahren (500) nach einem der vorhergehenden Ansprüche, wobei in einem die ersten und/oder zweiten Kartuschendaten (210) aufweisenden Transponder (220, 222), insbesondere in einem Speichers (221, 223) des Transponders (220, 222), der Kartusche (200) ein Kill-switch für eine irreversible Zerstörung des Transponders (220, 222) gesetzt wird, wenn eine Überschreitung eines Haltbarkeitsdatums der Kartusche (200) oder eine bereits erfolgte Benutzung der Kartusche (200) durch die Prozessiereinheit (100) festgestellt wird.

8. Verfahren (500) nach einem der vorhergehenden Ansprüche, wobei die ersten und/oder zweiten Kartuschendaten (210) in einem Speicher (221, 223) der Kartusche (100) gelöscht werden, wenn eine Überschreitung eines Haltbarkeitsdatums der Kartusche (200) oder eine bereits erfolgte Benutzung der Kartusche (200) durch die Prozessiereinheit (100) festgestellt wird.

9. Prozessiereinheit (100) zur Prozessierung einer Kartusche (200), insbesondere einer mikrofluidischen Kartusche (200), und einer in die Kartusche (200) aufgenommenen biologische Probe (10), wobei die Prozessiereinheit (100) eine Recheneinheit (150) aufweist, wobei die Recheneinheit (150) eingerichtet ist, eingegebene oder eingelesene Probendaten (12) mit eingegebenen oder eingelesenen ersten Kartuschendaten (210) auf eine Kompatibilität der Probe (10) mit der Kartusche (200) abzugleichen und eine erste Fehlermeldung auszugeben, wenn keine Kompatibilität der Probe (10) mit der Kartusche (200) durch die Recheneinheit (150) festgestellt werden kann,
**dadurch gekennzeichnet, dass**
die Prozessiereinheit (100) ferner eingerichtet ist, nach einem Abschluss der Prozessierung eine Information über die erfolgte Benutzung der Kartusche (200) in einem Speicher (221, 223) der Kartusche (200) abzulegen.

10. Prozessiereinheit (100) nach Anspruch 9, wobei die Recheneinheit (150) ferner eingerichtet ist, eingegebene oder eingelesene erste Kartuschendaten (210) mit von der Kartusche (200) eingelesenen zweiten Kartuschendaten auf einen identischen Identifikationsdatensatz abzugleichen und eine zweite Fehlermeldung auszugeben, wenn die ersten Kartuschendaten (210) und die zweiten Kartuschendaten nicht den identischen Identifikationsdatensatz umfassen.

## Claims

1. Method (500) for processing a cartridge (200), in particular a microfluidic cartridge (200), and a biological sample (10) received into the cartridge (200), with a processing unit (100), comprising the steps:
• entering (501) or scanning (501) sample data (12) into the processing unit (100) before inserting the sample (10) into the cartridge and before receiving the cartridge (200) into the processing unit (100)
• entering (502) or scanning (502) first cartridge data (210) into the processing unit (100)
• comparing (503) the sample data (12) with the first cartridge data (210) for compatibility of the sample (10) with the cartridge (200) by means of the processing unit (100)
• outputting (504) a first error message by the processing unit (100) if no compatibility of the sample (10) with the cartridge (200) can be detected by means of the processing unit (100)
• inserting (505) the sample (10) into the cartridge (200) if no first error message is output and receiving (505) the cartridge (200) into the processing unit (100) for further processing,
**characterized in that**
on completion of the processing, information about the completed use of the cartridge (200) is deposited in a memory (221, 223) of the cartridge (200) .

2. Method (500) according to Claim 1, further comprising the steps:
• scanning (506) second cartridge data from the cartridge (200) into the processing unit (100), wherein the scanning is carried out after receiving the cartridge (200) into the processing unit (100)
• comparing (507) the first cartridge data (210) with the second cartridge data for an identical identification data set by means of the processing unit (100)
• outputting (508) a second error message by the processing unit (100) if the first cartridge data (210) and the second cartridge data do not comprise the identical identification data set.

3. Method (500) according to any one of the preceding claims, wherein, if the cartridge (200) is found to be unusable during processing of the first or second cartridge data (210), information about the non-usability is stored in a memory (221, 223) of the cartridge (200), in particular as part of the first or second cartridge data (210).

4. Method (500) according to any one of the preceding claims, wherein an error message is output by the processing unit (100) if the non-usability of the cartridge (200) or the information about the already completed use of the cartridge (200) is detected during processing of the first or second cartridge data (210).

5. Method (500) according to any one of the preceding claims, wherein an expiry date of the cartridge (200) included in the first or second cartridge data (210) is compared with a current date by the processing unit (100), and if the current date is exceeded by the expiry date an error message is output by the processing unit (100) .

6. Method (500) according to any one of the preceding claims, wherein the first cartridge data (210) is read in via an optical scanning of the first cartridge data (210) applied to an outer side of the cartridge (200), wherein the first cartridge data (210) is applied, in particular, in the form of a one- or two-dimensional code.

7. Method (500) according to any one of the preceding claims, wherein in a transponder (220, 222), comprising the first and/or second cartridge data (210), in particular in a memory (221, 223) of the transponder (220, 222), of the cartridge (200), a kill-switch for irreversible destruction of the transponder (220, 222) is set if the exceeding of an expiry date of the cartridge (200) or an already completed use of the cartridge (200) is detected by the processing unit (100).

8. Method (500) according to any one of the preceding claims, wherein the first and/or second cartridge data (210) in a memory (221, 223) of the cartridge (100) are deleted if the exceeding of an expiry date of the cartridge (200) or an already completed use of the cartridge (200) is detected by the processing unit (100).

9. Processing unit (100) for processing a cartridge (200), in particular a microfluidic cartridge (200), and a biological sample (10) received into the cartridge (200), wherein the processing unit (100) has a calculation unit (150), the calculation unit (150) being configured to compare entered or scanned sample data (12) with entered or scanned first cartridge data (210) for compatibility of the sample (10) with the cartridge (200), and to output a first error message if no compatibility of the sample (10) with the cartridge (200) can be detected by the calculation unit (150),
**characterized in that**
the processing unit (100) is additionally configured, on completion of the processing, to deposit information about the completed use of the cartridge (200) in a memory (221, 223) of the cartridge (200).

10. Processing unit (100) according to Claim 9, wherein the calculation unit (150) is additionally configured to compare entered or scanned first cartridge data (210) with second cartridge data scanned from the cartridge (200) for an identical identification data set and to output a second error message if the first cartridge data (210) and the second cartridge data do not comprise the identical identification data set.

## Revendications

1. Procédé (500) de traitement d'une cartouche (200), notamment d'une cartouche microfluidique (200), et d'un échantillon biologique (10) accueilli dans la cartouche (200) avec une unité de traitement (100), comprenant les étapes suivantes :
* saisie (501) ou lecture (501) de données d'échantillon (12) dans l'unité de traitement (100) avant l'introduction de l'échantillon (10) dans la cartouche et avant l'accueil de la cartouche (200) dans l'unité de traitement (100)
* saisie (502) ou lecture (502) de premières données de cartouche (210) dans l'unité de traitement (100)
* comparaison (503) des données d'échantillon (12) avec les premières données de cartouche (210) en vue de vérifier la compatibilité de l'échantillon (10) avec la cartouche (200) par l'unité de traitement (100)
* délivrance en sortie (504) d'un premier message d'erreur par l'unité de traitement (100) si aucune compatibilité de l'échantillon (10) avec la cartouche (200) ne peut être constatée par l'unité de traitement (100)
* introduction (505) de l'échantillon (10) dans la cartouche (200) si aucun premier message d'erreur n'est délivré en sortie, et accueil (505) de la cartouche (200) dans l'unité de traitement (100) pour un traitement ultérieur
**caractérisé en ce que**
après l'achèvement du traitement, une information à propos de l'utilisation effectuée de la cartouche (200) est stockée dans une mémoire (221, 223) de la cartouche (200) .

2. Procédé (500) selon la revendication 1, comprenant en outre les étapes suivantes :
* lecture (506) de deuxièmes données de cartouche de la cartouche (200) dans l'unité de traitement (100), la lecture s'effectuant après l'accueil de la cartouche (200) dans l'unité de traitement (100)
* comparaison (507) des premières données de cartouche (210) avec les deuxièmes données de cartouche en vue d'un jeu de données d'identification identique par l'unité de traitement (100)
* délivrance en sortie (508) d'un deuxième message d'erreur par l'unité de traitement (100) si les premières données de cartouche (210) et les deuxièmes données de cartouche ne comportent pas le jeu de données d'identification identique.

3. Procédé (500) selon l'une des revendications précédentes, avec lequel, dans le cas d'une impossibilité d'utilisation de la cartouche (200) constatée lors du traitement des premières ou des deuxièmes données de cartouche (210), une information à propos de l'impossibilité d'utilisation est stockée dans une mémoire (221, 223) de la cartouche (200), notamment en tant que partie des premières ou des deuxièmes données de cartouche (210).

4. Procédé (500) selon l'une des revendications précédentes, avec lequel un message d'erreur est délivré en sortie par l'unité de traitement (100) si, lors d'un traitement des premières ou des deuxièmes données de cartouche (210), une impossibilité d'utilisation de la cartouche (200) ou l'information à propos de l'utilisation déjà effectuée de la cartouche (200) est déterminée.

5. Procédé (500) selon l'une des revendications précédentes, avec lequel une date de péremption de la cartouche (200), contenu dans les premières ou deuxièmes données de cartouche (210), est comparée avec une date actuelle par l'unité de traitement (100) et, dans le cas d'un dépassement de la date actuelle par la date de péremption, un message d'erreur est délivré en sortie par l'unité de traitement (100).

6. Procédé (500) selon l'une des revendications précédentes, avec lequel la lecture des premières données de cartouche (210) s'effectue par le biais d'une lecture optique des premières données de cartouche (210) apposées sur un côté extérieur de la cartouche (200), les premières données de cartouche (210) étant notamment apposées sous la forme d'un code uni- ou bidimensionnel.

7. Procédé (500) selon l'une des revendications précédentes, avec lequel, dans un transpondeur (220, 222) qui possède les premières et/ou les deuxièmes données de cartouche (210), notamment dans une mémoire (221, 223) du transpondeur (220, 222) de la cartouche (200), un commutateur de destruction pour une destruction irréversible du transpondeur (220, 222) est activé lorsqu'un dépassement d'une date de péremption de la cartouche (200) ou une utilisation déjà effectuée de la cartouche (200) est constatée par l'unité de traitement (100) .

8. Procédé (500) selon l'une des revendications précédentes, avec lequel les premières et/ou les deuxièmes données de cartouche (210) dans une mémoire (221, 223) de la cartouche (100) sont effacées lorsqu'un dépassement d'une date de péremption de la cartouche (200) ou une utilisation déjà effectuée de la cartouche (200) est constatée par l'unité de traitement (100).

9. Unité de traitement (100) pour le traitement d'une cartouche (200), notamment d'une cartouche microfluidique (200), et d'un échantillon biologique (10) accueilli dans la cartouche (200), l'unité de traitement (100) possédant une unité de calcul (150), l'unité de calcul (150) étant conçue pour comparer des données d'échantillon (12) saisies ou lues avec des premières données de cartouche (210) saisies ou lues en vue de vérifier la compatibilité de l'échantillon (10) avec la cartouche (200) et délivrer en sortie un premier message d'erreur si aucune compatibilité de l'échantillon (10) avec la cartouche (200) ne peut être constatée par l'unité de calcul (150),
**caractérisée en ce que**
l'unité de traitement (100) est en outre conçue pour, après l'achèvement du traitement, stocker une information à propos de l'utilisation effectuée de la cartouche (200) dans une mémoire (221, 223) de la cartouche (200).

10. Unité de traitement (100) selon la revendication 9, l'unité de calcul (150) étant en outre conçue pour comparer des premières données de cartouche (210) saisies ou lues avec des deuxièmes données de cartouche lues par la cartouche (200) en vue d'un jeu de données d'identification identique et délivrer en sortie un deuxième message d'erreur si les premières données de cartouche (210) et les deuxièmes données de cartouche ne comportent pas le jeu de données d'identification identique.
